# EUROPEAN PATENT SPECIFICATION

(11) **EP 4 446 891 B1**
(45) Date of publication and mention of the grant of the patent: **20.05.2026**
(21) Application number: 23869325.3
(22) Date of filing: 14.09.2023
(51) Int. Cl.: G06F 9/50

(54) **THREAD BLOCK PROCESSING SYSTEM AND METHOD, AND RELATED DEVICE**
FADENBLOCKVERARBEITUNGSSYSTEM UND -VERFAHREN UND ZUGEHÖRIGE VORRICHTUNG
SYSTÈME ET PROCÉDÉ DE TRAITEMENT DE BLOC DE FILS, ET DISPOSITIF ASSOCIÉ

(30) Priority: 23.02.2023 CN 202310165825
(43) Date of publication of application: 16.10.2024
(73) Proprietor: HYGON INFORMATION TECHNOLOGY CO., LTD., Binhai New Area, Tianjin 300392 (CN)
(72) Inventor: YU, Chen, Tianjin 300392 (CN); ZUO, Hang, Tianjin 300392 (CN); YUAN, Qing, Tianjin 300392 (CN); PAN, Yu, Tianjin 300392 (CN)
(74) Representative: Regimbeau
(86) International application number: PCT/CN2023/118779
(87) International publication number: WO 2024/174504

(56) References cited:
- WO-A1-2019/157743
- CN-A- 110 308 982
- CN-A- 111 626 916
- CN-A- 111 626 916
- CN-A- 114 780 236
- CN-A- 116 302 504
- US-A1- 2013 305 258
- US-A1- 2014 149 719
- US-A1- 2020 334 076
- YEH TSUNG TAI YEH14@PURDUE EDU ET AL: "Pagoda", ACM SIGPLAN NOTICES, ASSOCIATION FOR COMPUTING MACHINERY, US, vol. 52, no. 8, 26 January 2017 (2017-01-26), pages 221 - 234, XP058489205, ISSN: 0362-1340, DOI: 10.1145/3155284.3018754
- YEH, SABNE, SAKDHNAGOOL, EIGENMANN, ROGERS: "Pagoda: A GPU Runtime System for Narrow Tasks", ACM TRANSACTIONS ON PARALLEL COMPUTING, vol. 6, no. 4, 19 November 2019 (2019-11-19), pages 1 - 23, XP058448130

## Description

### CROSS-REFERENCE TO THE RELATED APPLICATION

The present application claims priority of Chinese Patent Application No. 202310165825.8, filed on February 23, 2023.

### TECHNICAL FIELD

Embodiments of the present disclosure relate to a processing system of a thread block, a method and a relative device.

### BACKGROUND

Graphics processor unit (GPU) is a microprocessor that specializes in computing tasks related to images and graphics. Due to the high-parallel processing capabilities, GPU has great advantages in performing parallel processing algorithms on data blocks.

Before a GPU performs parallel data processing, it usually needs to load a large amount of data from an external storage space to a local storage space. For example, data need to be loaded from a main memory (global memory) located outside the GPU into the data sharing space of the streaming multiprocessor (SM) inside the GPU.

However, the time delay in loading data from external storage space is very large, which may seriously affect the execution efficiency of the GPU. Therefore, how to provide a task processing system to improve the execution efficiency of the GPU becomes an urgent technical problem that those skilled in the art need to solve. US 2014149719A1 discloses an arithmetic processing apparatus including a plurality of arithmetic cores and a control unit.

### SUMMARY

In view of this, the embodiments of the present disclosure provide a processing system of a thread block, a method, and a related device, which can reduce the time delay of loading data to be processed, especially reduce the time delay of loading data to be processed from external storage space, and improve the processing efficiency of thread blocks.

In order to achieve the above objectives, the embodiments of the present disclosure provide the following technical solutions.

In the first aspect, the embodiments of the present disclosure provide a processing system of a thread block, wherein the thread block comprises a first sub-thread block and a second sub-thread block that are decomposed, and the processing system comprises:
a first computing unit for running the first sub-thread block and a second computing unit for running the second sub-thread block;
the first computing unit is used for obtaining data to be processed of the thread block, and the second computing unit is used for executing a processing task of the thread block according to the data to be processed obtained by the first computing unit.

The first computing unit is further used for loading the data to be processed that are obtained into the second computing unit.

The first computing unit comprises:
a first warp scheduler, used for receiving an instruction scheduling request sent by the second computing unit, where the instruction scheduling request is used for indicating inserting a remote loading instruction into an instruction queue of the first warp scheduler; and
a first local share memory, used for sending the data to be processed that are pre-stored in the first local share memory to the second computing unit according to instruction information of the remote loading instruction.

The second computing unit comprises:
a second warp scheduler, used for sending an instruction scheduling request to the first computing unit and sending a remote writing request instruction to the second local share memory; and
a second local share memory, used for waiting for data writing from the first computing unit according to instruction information of the remote writing request instruction.

Optionally, the first computing unit and the second computing unit are independent running computing units, respectively, which are located on a same parallel processor.

Optionally, the data to be processed are stored in a storage space located outside the parallel processor.

Optionally, the parallel processor is a graphics processing unit.

In the second aspect, the embodiments of the present disclosure also provide a processing method of a thread block, applied to a parallel processor, and the processing method comprises:
decomposing the thread block into at least a first sub-thread block and a second sub-thread block, where the first sub-thread block is used for obtaining data to be processed of the thread block, and the second sub-thread block is used for executing a task of the thread block according to the data to be processed obtained by the first sub-thread block; and
assigning the first sub-thread block to a first computing unit, and assigning the second sub-thread block to a second computing unit.

Optionally, the first computing unit and the second computing unit are independent running computing units, respectively, which are located on a same parallel processor, and the data to be processed are stored in a storage space located outside the parallel processor.

The processing method further comprises:
obtaining the data to be processed of the thread block by the first computing unit, and
loading the data to be processed to the second computing unit.

Loading the data to be processed to the second computing unit by the first computing unit comprises:
in response to an instruction scheduling request sent by the second computing unit, inserting a remote loading instruction into an instruction queue of a warp scheduler of the first computing unit; and
according to instruction information of the remote loading instruction, the warp scheduler of the first computing unit notifying a local share memory of the first computing unit to send the data to be processed to a local share memory of the second computing unit.

In the third aspect, the embodiments of the present disclosure also provide a processor, which comprises the processing system of the thread block described above.

In the fourth aspect, the embodiments of the present disclosure also provide an electronic device, which comprises the processor described above.

The embodiments of the present disclosure provide a processing system of a thread block, a method and a relative device. In the system, the thread block to be processed is decomposed into at least two sub-thread blocks, where the first sub-thread block is used for obtaining the data to be processed of the thread block, and the second sub-thread block is used for executing the task of the thread block according to the data to be processed obtained by the first sub-thread block. It can be seen that the processing system of the thread block provided by the embodiments of the present disclosure can effectively reduce the time delay of loading data to be processed, especially reduce the time delay of loading data to be processed from external storage space, and improve the processing efficiency of thread blocks.

### BRIEF DESCRIPTION OF THE DRAWINGS

To explain the technical scheme of the embodiments of the present disclosure more clearly, the drawings used in the description of the embodiments will be briefly described in the following. It is obvious that the drawings described below are only related to some embodiments of the present disclosure. For ordinary skilled person in the art, other drawings can be obtained according to these drawings without creative labor.
FIG. 1 is a schematic diagram of a decomposition method for computing tasks;
FIG. 2 is a structural schematic diagram of a graphics processor unit containing multiple computing units;
FIG. 3 is a structural schematic diagram of a processing system of a thread block provided by the embodiments of the present disclosure;
FIG. 4 is a flowchart of a processing method of a thread block provided by the embodiments of the present disclosure; and
FIG. 5 is a flowchart of a processing method of a thread block provided by the embodiments of the present disclosure.

### DETAILED DESCRIPTION

The technical scheme in the embodiments of the present disclosure will be clearly and completely described in combination with the drawings related to the embodiments of the present disclosure. Apparently, the embodiments described are only part of the embodiments of the present disclosure, not all the embodiments. Based on the embodiments of the present disclosure, all other embodiments obtained by ordinary skilled person in the art without creative labor shall fall within the scope of protection of the present disclosure.

It can be understood that a parallel processor (such as a graphics processor unit) can decompose a computing task into corresponding task items when processing the computing task in parallel, thereby enabling respective components used for data processing in the parallel processor to perform corresponding calculations based on respective task items.

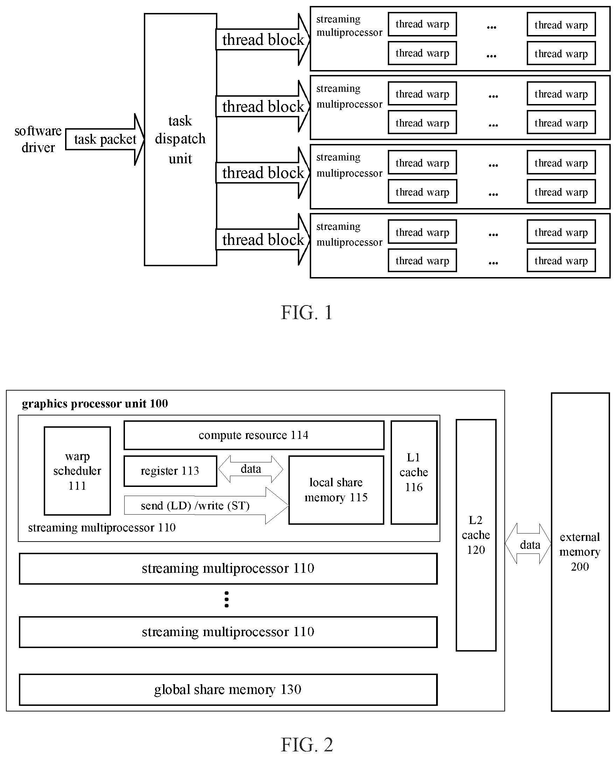

FIG. 1 illustrates an exemplary decomposition method for computing tasks. The task packet issued by the upper software driver is distributed through a task dispatch unit, and then distributed to each independently running computing unit of the parallel processor in the form of thread blocks, e.g., distributed to respective streaming multiprocessors (SM) within the graphics processor unit. The graphics processor unit can be a general purpose graphics processing unit (GPGPU). The GPGPU is a special type of graphics processor unit that tends to be general use rather than graphic rendering. The GPGPU has a large number of streaming multiprocessor hardware units inside, and the streaming multiprocessor is the hardware unit that executes tasks in the GPGPU. Specifically, within the streaming multiprocessor, the thread block is split into multiple thread warps for scheduling and executing. The thread warp is the smallest unit that can be scheduled in a graphics processor unit, the thread warp includes multiple threads that are bundled together, the thread is the smallest execution object in a graphics processor unit, and these threads which are bundled together execute the same instruction. The difference is that the data operated by each thread may be different. The above mode is also known as the single instruction multiple thread (SIMT) architecture, where threads in a thread warp execute the same instruction, furthermore, all threads in a thread block also execute the same instruction, with the difference that the data operated by each thread may be different. Each thread warp within the same thread block completes a portion of the entire task, and all thread warps within the thread block work together to complete the entire task.

FIG.2 illustrates an exemplary structural diagram of a graphics processor unit 100 containing multiple computing units. As shown in the figure, the graphics processor unit 100 includes a streaming multiprocessor 110, a second-level cache (L2 cache) 120, and a global share memory 130. Specifically, one streaming multiprocessor 110 further includes: a warp scheduler 111, a register 113, a compute resource 114, a local share memory 115, and a first-level cache (L1 cache) 116.

Before performing data calculations, thread warps usually need to perform a large number of operations to load external data, so as to load the data that may be used subsequently by thread warps from the storage space outside the graphics processor unit 100 to the storage space inside the graphics processor unit 100. Specifically, the data that may be used subsequently are first loaded from an external memory 200 into the local shared memory 115 where the thread warp is located, and the thread warp can then move the required data from the local share memory 115 to the register 113 corresponding to the thread warp for data calculation. And during the process of loading the above data from the external memory 200 to the local share memory 115 where the thread warp is located, the loaded data are not directly loaded from the external memory 200 to the local share memory 115, instead, the data need to be first loaded from the external memory 200 to the L2 cache 120, then loaded from the L2 cache 120 to the L1 cache 116, and finally loaded from the L1 cache 116 to the local share memory 115. Each step of the loading process mentioned above may generate a time delay, and the time delay generated by the process of loading data from the external memory 200 to the register 113 corresponding to the thread warp is the sum of the time delays of each loading step mentioned above.

It can be seen that the operation of loading data from external storage space by the thread warp causes significant time delay, and the execution of instructions in the thread warp is serial, that is, if there is a subsequent operation of loading data from external memory during the thread warp performing data calculation, the operation of loading data cannot be executed simultaneously with the data calculation operation, and the data loading operation can only be executed after the previous data calculation operation is completed. The serial execution feature of thread warps makes it difficult to hide respective time delays of data calculation operations and external data loading operations, which further affects the execution efficiency of thread warps.

Aims at the above problems, the embodiments of the present disclosure provide a processing system of a thread block, a method and a relative device. In the embodiments of the present disclosure, one thread block is decomposed into a first sub-thread block and a second sub-thread block, the first sub-thread block is loaded into a first computing unit which is used for obtaining the data to be processed of the thread block, and the second sub-thread block is loaded into a second computing unit which is used for loading the data to be processed from the first computing unit and executing the processing task of the thread block.

It can be seen that the processing system of the thread block provided by the embodiments of the present disclosure can reduce the time delay of loading data from external storage space by the thread warp in the thread block, and improve the processing efficiency of thread blocks.

The following provides a detailed introduction to the processing system of the thread block provided by the embodiment of the present disclosure.

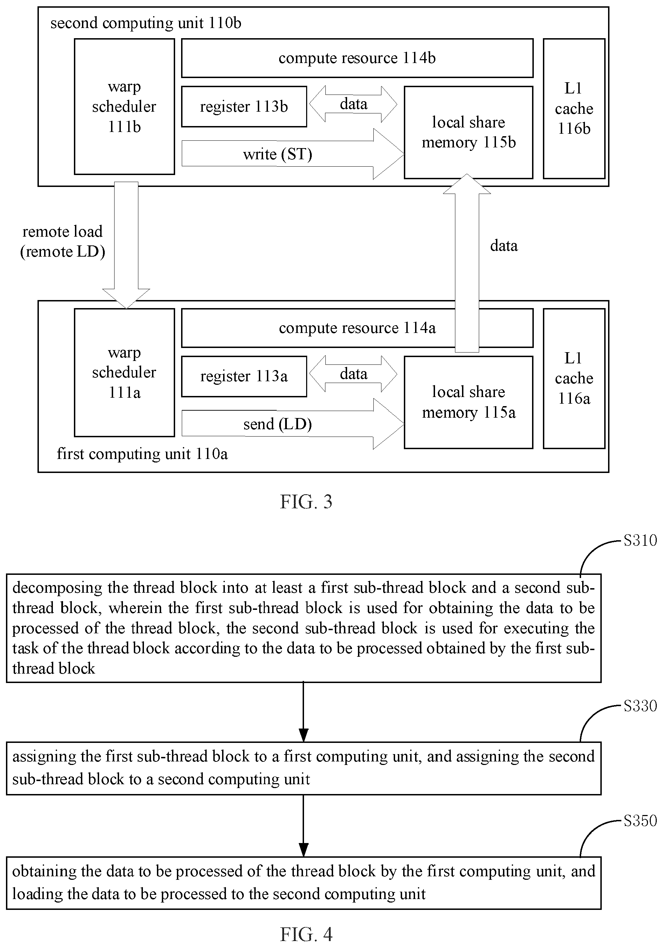

In an optional implementation, FIG. 3 illustrates a structural schematic diagram of a processing system of a thread block provided by an embodiment of the present disclosure. The thread block includes a first sub-thread block and a second sub-thread block that are decomposed, and the processing system includes a first computing unit 110a and a second computing unit 110b. The first computing unit 110a is used to run the first sub-thread block, and the second computing unit 110b is used to run the second sub-thread block. The first computing unit 110a is used to obtain the data to be processed of the thread block, and the second computing unit 110b is used to execute the processing task of the thread block based on the data to be processed obtained by the first computing unit 110a.

In the present embodiments, in order to improve task execution efficiency, one thread block is decomposed into two sub-thread blocks, i.e., a first sub-thread block and a second sub-thread block. Each sub-thread block completes a portion of the entire thread block task. Specifically, in this embodiment, the first sub-thread block is used for implementing the task of obtaining the data to be processed of the thread block from outside, and the second sub-thread block is used for implementing the task of processing the data to be processed which are obtained by the first sub-thread block. It can be understood that in other embodiments, one thread block can also be decomposed into more sub-thread blocks, and respective sub-thread blocks cooperate with each other to complete the task corresponding to the entire thread block.

The first computing unit 110a and the second computing unit 110b can be independent running computing units in the parallel processor, as an example, in this embodiment, the first computing unit 110a and the second computing unit 110b are streaming multiprocessors, respectively, which are located within the same graphics processor unit. The streaming multiprocessor is a computing unit within a graphics processor unit that can run independently. The amount of streaming multiprocessors within a graphics processor unit can range from tens to tens of thousands.

The first computing unit 110a is used to obtain the data to be processed of the thread block. The various thread warps within the thread block usually need to perform a large amount of data loading operations before performing data calculations, and the data loaded by the thread warp are also referred to as data to be processed. The data to be processed are usually stored outside the graphics processor unit, and the first computing unit 110a needs to obtain the data to be processed from the external storage space. As an optional example, referring to FIG. 2 and FIG. 3, the data to be processed are stored in an external memory 200, which is located outside of the graphics processor unit 100, and can enable multiple graphics processor units 100 to share data or enable the graphics processor unit 100 to share data with the central processing unit (CPU). The first computing unit 110a may need to go through multiple data loading processes to obtain the data to be processed from the external memory 200. For example, in an example, the data to be processed is loaded from the external memory 200 into the L2 cache 120, then loaded from the L2 cache 120 into the L1 cache 116, and finally loaded from the L1 cache 116 into the local share memory 115a of the first computing unit 110a.

The first computing unit 110a is also used to load the obtained data to be processed into the second computing unit 110b. In an optional example, after the data to be processed stored in the external memory 200 are obtained by the first computing unit 110a, the data to be processed can be stored in the local share memory 115a of the first computing unit 110a, and the first computing unit 110a can load the data to be processed pre-stored in the local share memory 115a into the second computing unit 110b according to the request of the second computing unit 110b.

In an optional example, the first computing unit 110a further includes: a warp scheduler 111a, a register 113a, a computing resource 114a, a local share memory 115a, and a first level cache (L1 cache) 116a.

The warp scheduler 111a is used to receive an instruction scheduling request, and the instruction scheduling request is used to indicate the insertion of a remote loading instruction in the instruction queue of the warp scheduler 111a.

The instruction scheduling request is sent by the second computing unit 110b, specifically, can be sent by a warp scheduler 111b of the second computing unit 110b, that is, the warp scheduler 111b of the second computing unit 110b sends an instruction scheduling request to the warp scheduler 111a of the first computing unit 110a.

The remote loading instruction is used to indicate that the local share memory 115a of the first computing unit 110a reads the pre-stored data to be processed in the local share memory 115a and sends the data to be processed to the second computing unit 110b, that is, loads the pre-stored data to be processed in the local share memory 115a into the second computing unit 110b. Specifically, the data to be processed can be sent to the designated address of the local share memory 115b of the second computing unit 110b.

The local share memory 115a is a data sharing space of the first computing unit 110a, and data can be shared between various thread warps in the first computing unit 110a through the local share memory 115a. The local share memory 115a reads the pre-stored data to be processed in the local share memory 115a according to the instruction information of the remote loading instruction, and sends the data to be processed to the second computing unit 110b, that is, the pre-stored data to be processed in the local share memory 115a are sent to the second computing unit 110b. Specifically, the data to be processed can be sent to the designated address of the local share memory 115b of the second computing unit 110b.

The register 113a is used to store various types of data and calculation results required for task execution of thread warp. The register 113a is allocated according to the thread warps, and each thread warp has a corresponding register 113a. In some examples, data cannot be directly shared between registers 113a and need to be transferred through the local share memory 115a. For example, in the case where there are two thread warps, i.e., thread warp a and thread warp b, which are located in the same computing unit, data cannot be shared between the register corresponding to thread warp a and the register corresponding to thread warp b. If data needs to be shared between thread warp a and thread warp b, it can be implemented through the local share memory 115a. Both thread warp a and thread warp b can read from and write to the local share memory 115a. If thread warp b needs to load the data of the register corresponding to thread warp a, thread warp a needs to write the data of its register into the local share memory 115a, and then thread warp b loads the data written by the register corresponding to thread warp a from the corresponding address in the local share memory 115a into the register corresponding to thread warp b.

The computing resource 114a includes units for a series of mathematical operations such as multiplication, addition, etc.

The second computing unit 110b is used to execute the processing task of the thread block according to the data to be processed obtained by the first computing unit 110a. In an optional example, the second computing unit 110b further includes: a warp scheduler 111b, a register 113b, a computing resource 114b, a local share memory 115b, and a first-level cache (L1 cache) 116b.

The warp scheduler 111b is used to send an instruction scheduling request to the first computing unit 110a, and the instruction scheduling request is used to indicate the insertion of a remote loading instruction into the instruction queue of the warp scheduler 111a. Specifically, the warp scheduler 111b sends an instruction scheduling request to the warp scheduler 111a of the first computing unit 110a, and the instruction scheduling request is used to indicate the insertion of a remote loading instruction in the instruction queue of the warp scheduler 111a of the first computing unit 110a.

The warp scheduler 111b is also used to send a remote writing request (ST) instruction to the local share memory 115b. The remote writing request instruction is used to indicate that the local share memory 115b waits for data writing from the first computing unit 110a, specifically, data writing from the local share memory 115a of the first computing unit 110a.

The local share memory 115b is the data sharing space of the second computing unit 110b, and data can be shared between various thread warps in the second computing unit 110b through the local share memory 115b. The local share memory 115b waits for data writing from the first computing unit 110a according to the instruction information of the remote writing request instruction, specifically, data writing from the local share memory 115a of the first computing unit 110a.

The register 113b is used to store various types of data and calculation results required for task execution of thread warp. The register 113b is allocated according to thread warps, and each thread warp has a corresponding register 113b. Similar to the register 113a, data cannot be directly shared between the registers 113b and needs to be transferred through the local share memory 115b.

The computing resource 114b includes units for a series of mathematical operations such as multiplication, addition, etc.

The processing system of the thread block provided by the embodiments of the present disclosure includes two independent computing units, where the first computing unit is used for obtaining the data to be processed of the thread block, and the second computing unit is used for executing the processing task of the thread block according to the data to be processed obtained by the first computing unit. Specifically, when the thread warp on the second computing unit performs intensive data calculations, the thread warp on the first computing unit can pre-load some shared data subsequently needed for the thread warp executing data calculations on the second computing unit. The aforementioned preloaded shared data are stored in the local share memory of the first computing unit. After the thread warp on the second computing unit completes the intensive data calculations, the above shared data can be copied to the address corresponding to the local share memory of the second computing unit for use by the second computing unit. The time delay for data transfer between local share memories in the computing unit is much lower than the time delay for loading data from external storage space. In this embodiment, the first computing unit loads external data, while the second computing unit can use the data pre-loaded by the first computing unit for calculation. The two computing units work together to complete the processing task of the thread block, thereby effectively reducing the time delay of loading data to be processed, especially reducing the time delay of loading data to be processed from external storage space, and improving the processing efficiency of thread blocks.

It can be understood that in the embodiments of the present disclosure, it is taken as an example for explanation that one thread block is decomposed into two sub-thread blocks. In other cases, one thread block can also be decomposed into more sub-thread blocks according to actual needs. It can be understood that in the embodiments of the present disclosure, the data transmission process between two streaming multiprocessors is taken as an example, that is, one streaming multiprocessor accesses the local share memory of another streaming multiprocessor. In other cases, it can also be extended to the data transmission process between multiple streaming multiprocessors, that is, one streaming multiprocessor accesses the local share memories of multiple other streaming multiprocessors.

The embodiments of the present disclosure also provide a processing method of a thread block, and the method is used for, e.g., a parallel processor, which is a general purpose graphics processing unit. The embodiments of the present disclosure do not limit this aspect.

In the optional implementation, FIG. 4 illustrates an optional flowchart of the processing method of the thread block provided by the embodiments of the present disclosure. As illustrated in the figure, the method comprises following steps.

Step S310, decomposing the thread block into at least a first sub-thread block and a second sub-thread block. The first sub-thread block is used to obtain the data to be processed of the thread block, and the second sub-thread block is used to execute the task of the thread block according to the data to be processed obtained by the first sub-thread block.

In this embodiment, in order to improve the execution efficiency of the task, the thread block to be processed is decomposed into at least two sub-thread blocks, i.e., the first sub-thread block and second sub-thread block, each of which completes a portion of the entire thread block task. In this embodiment, the first sub-thread block is used to implement the task of obtaining the data to be processed of the thread block from external memory, and the second sub-thread block is used to implement the task of processing the data to be processed obtained by the first sub-thread block. It can be understood that in other examples, one thread block can also be decomposed into more sub-thread blocks, and respective sub-thread blocks cooperate with each other to complete the task corresponding to the entire thread block.

Step S330, assigning the first sub-thread block to the first computing unit, and assigning the second sub-thread block to the second computing unit.

The first computing unit 110a and the second computing unit 110b can be independent running computing units in the parallel processor. As an example, in this embodiment, the first computing unit 110a and the second computing unit 110b are streaming multiprocessors, respectively, which are located within the same graphics processor unit. The streaming multiprocessor is a computing unit within a graphics processor unit that can run independently. The amount of streaming multiprocessors within a graphics processor unit can range from tens to tens of thousands.

In an optional example, the first computing unit 110a further includes: a warp scheduler 111a, a register 113a, a computing resource 114a, a local share memory 115a, and a first level cache (L1 cache) 116a.

The warp scheduler 111a is used to receive an instruction scheduling request, and the instruction scheduling request is used to indicate the insertion of a remote loading instruction in the instruction queue of the warp scheduler 111a.

The instruction scheduling request is sent by the second computing unit 110b, specifically, the instruction scheduling request can be sent by the warp scheduler 111b of the second computing unit 110b, that is, the warp scheduler 111b of the second computing unit 110b sends an instruction scheduling request to the warp scheduler 111a of the first computing unit 110a.

The remote loading instruction is used to indicates that the local share memory 115a of the first computing unit 110a reads the pre-stored data to be processed in the local share memory 115a, and sends the data to be processed to the second computing unit 110b, that is, loads the pre-stored data to be processed in the local share memory 115a into the second computing unit 110b. Specifically, the data to be processed can be sent to the designated address of the local share memory 115b of the second computing unit 110b.

The local share memory 115a is the data sharing space of the first computing unit 110a, and data can be shared between various thread warps in the first computing unit 110a through the local share memory 115a. The local share memory 115a reads the pre-stored data to be processed in the local share memory 115a according to the instruction information of the remote loading instruction, and sends the data to be processed to the second computing unit 110b, that is, the pre-stored data to be processed in the local share memory 115a are sent to the second computing unit 110b. Specifically, the data to be processed can be sent to the designated address of the local share memory 115b of the second computing unit 110b.

The register 113a is used to store various types of data and calculation results required for task execution of the thread warp. The register 113a is allocated according to thread warps, and each thread warp has a corresponding register 113a. In some examples, data cannot be directly shared between registers 113a and needs to be transferred through the local share memory 115a. For example, in the case that there are two thread warps, i.e., thread warp a and thread warp b, which are located in the same computing unit, data cannot be shared between the register corresponding to thread warp a and the register corresponding to thread warp b. If data needs to be shared between thread warp a and thread warp b, it needs to be implemented through the local share memory 115a. Both thread warp a and thread warp b can read from and write into the local share memory 115a. If thread warp b needs to load the data of the register corresponding to thread warp a, thread warp a needs to write the data in the corresponding register to the local share memory 115a, and then thread warp b loads the data written by the register corresponding to thread warp a from the corresponding address in the local share memory 115a into the corresponding register of thread warp b.

The computing resource 114a includes units for a series of mathematical operations such as multiplication, addition, etc.

The second computing unit 110b is used to execute the processing task of the thread block according to the data to be processed obtained by the first computing unit 110a. In an optional example, the second computing unit 110b further includes: a warp schedule 111b, a register 113b, a computing resource 114b, a local share memory 115b, and a first level cache (L1 cache) 116b.

The warp schedule 111b is used to send an instruction scheduling request to the first computing unit 110a, and the instruction scheduling request is used to indicate the insertion of a remote loading instruction into the instruction queue of the warp schedule 111a. Specifically, the warp schedule 111b sends an instruction scheduling request to the warp schedule 111a of the first computing unit 110a, and the instruction scheduling request is used to indicate the insertion of a remote loading instruction in the instruction queue of the warp schedule 111a of the first computing unit 110a.

The warp schedule 111b is further used to send a remote writing request instruction to the local share memory 115b. The remote writing request instruction is used to indicate that the local share memory 115b waits for data writing from the first computing unit 110a, specifically, data writing from the local share memory 115a the first computing unit 110a.

The local share memory 115b is the data sharing space of the second computing unit 110b, and data can be shared between various thread warps in the second computing unit 110b through the local share memory 115b. The local share memory 115b waits for data writing from the first computing unit 110a according to the instruction information of the remote writing request instruction, specifically, data writing from the local share memory 115a of the first computing unit 110a.

The register 113b is used to store various types of data and calculation results required for task execution of the thread warp. The register 113b is assigned according to thread warps, and each thread warp has a corresponding register 113b. Similar to the register 113a, data between registers 113b cannot be directly shared and need to be transferred through the local share memory 115b.

The computing resource 114b includes units for a series of mathematical operations such as multiplication, addition, etc.

Step S350, the first computing unit obtaining the data to be processed of the thread block and loading the data to be processed into the second computing unit.

The first computing unit 110a obtains the data to be processed of the thread block. The various thread warps within the thread block usually require a large amount of data loading operations before performing data calculations, and the data loaded by the thread warp is also referred to as data to be processed. The data to be processed are usually stored outside the graphics processor unit, and the first computing unit 110a needs to obtain the data to be processed from the external storage space. As an optional example, referring to FIG. 2 and FIG. 3, the data to be processed are stored in the external memory 200, which is located outside of the graphics processor unit 100, and can enable multiple graphics processor units 100 to share data or enable the graphics processor unit 100 to share data with the CPU. The first computing unit 110a may need to go through multiple data loading processes to obtain the data to be processed from the external memory 200. For example, in an example, the data to be processed are loaded from the external memory 200 into the L2 cache 120, then loaded from the L2 cache 120 into the L1 cache 116, and finally loaded from the L1 cache 116 into the local share memory 115a of the first computing unit 110a.

The data to be processed are the data required for the second computing unit 110b to execute thread block tasks, such as various data that may be used by the second computing unit 110b during the data calculation process. The first computing unit 110a reads the data to be processed from the external storage space in advance and stores the data to be processed in the internal storage space of the first computing unit 110a, such as the local share memory 115a of the first computing unit 110a.

The first computing unit 110a also loads the obtained data to be processed into the second computing unit 110b. In an optional example, after the data to be processed stored in the external memory 200 are obtained by the first computing unit 110a, the data to be processed can be stored in the local share memory 115a of the first computing unit 110a, and the first computing unit 110a can send the data to be processed pre-stored in the local share memory 115a to the second computing unit 110b according to the request of the second computing unit 110b.

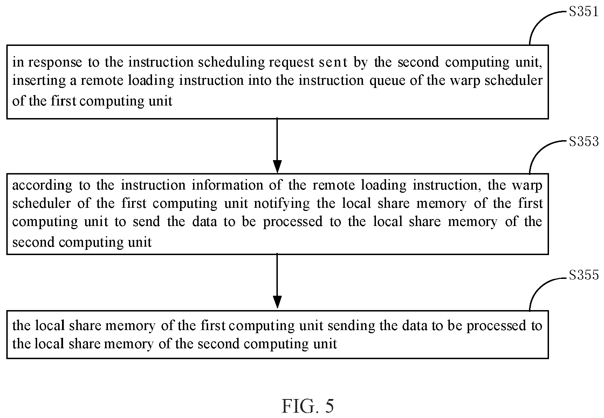

Specifically, referring to FIG. 5, in step S350, the first computing unit obtains the data to be processed of the thread block and loads the data to be processed into the second computing unit, which can further include:
step 351, in response to the instruction scheduling request sent by the second computing unit, inserting a remote loading instruction into the instruction queue of the warp scheduler of the first computing unit.

The instruction scheduling request is used to indicate the insertion of a remote data transmission instruction in the instruction queue of the first computing unit 110a. The remote loading instruction is used to indicate that the local share memory 115a of the first computing unit 110a sends the data to be processed to the local share memory 115b of the second computing unit 110b.

The remote loading instruction at least includes the current address and target address of the data to be processed. The current address of the data to be processed is located in the internal storage space of the first computing unit 110a, such as the local share memory 115a of the first computing unit 110a, and the target address of the data to be processed is located in the internal storage space of the second computing unit 110b, such as the local share memory 115b of the second computing unit 110b.

As an example, referring to FIG. 3, one thread warp of the second computing unit 110b which serves as the receiving end sends an instruction scheduling request to the warp scheduler 111a of the first computing unit 110a when it is scheduled by the warp scheduler 111b of the second computing unit 110b to execute a remote load (remote LD) instruction, and notifies the warp scheduler 111a of the first computing unit 110a that a remote loading instruction needs to be instantly inserted and scheduled. The warp scheduler is mainly responsible for scheduling thread warps in the graphics processor unit, as well as operations on instructions in the thread warp such as instruction fetching, decoding, emitting instructions, etc. The warp scheduler 111a of the first computing unit 110a inserts the remote loading instruction into the instruction queue after receiving the instruction scheduling request.

Step S353, according to the instruction information of the remote loading instruction, the warp scheduler of the first computing unit notifying the local share memory of the first computing unit to send the data to be processed to the local share memory of the second computing unit.

As an example, the warp scheduler 111a of the first computing unit 110a notifies that the local share memory 115a of the first computing unit 110a needs to read data from a specified address and send the data to the specified location of the local share memory 115b of the second computing unit 110b.

Step S355, the local share memory of the first computing unit sending the data to be processed to the local share memory of the second computing unit.

The processing method of the thread block provided by this embodiment decomposes the thread block to be processed into at least two sub-thread blocks, the first sub-thread block is used to obtain the data to be processed of the thread block, and the second sub-thread block is used to execute the task of the thread block according to the data to be processed obtained by the first sub-thread block. It can be seen that the processing method of the thread block provided by this embodiment can effectively reduce the time delay of loading data to be processed, especially reducing the time delay of loading data to be processed from external storage space, and improving the processing efficiency of thread blocks.

It can be understood that in the embodiments of the present disclosure, it is taken as an example for explanation that one thread block is decomposed into two sub-thread blocks. In other cases, one thread block can also be decomposed into more sub-thread blocks according to actual needs. It can be understood that in the embodiments of the present disclosure, the data transmission process between two streaming multiprocessors is taken as an example, that is, one streaming multiprocessor accesses the local share memory of another streaming multiprocessor. In other cases, it can also be extended to the data transmission process between multiple streaming multiprocessors, that is, one streaming multiprocessor accesses the local share memories of multiple other streaming multiprocessors.

Some embodiments of the present disclosure also provide a processor, which includes the processing system of the thread block provided by the embodiments of the present disclosure.

Some embodiments of the present disclosure also provide an electronic device, which includes the processor provided by the embodiments of the present disclosure.

Some embodiments of the present disclosure also provide a storage medium that stores one or more executable instructions, the one or more executable instructions are used for executing the processing method of the thread block provided by the embodiments of the present disclosure.

The above describes multiple embodiments provided by the embodiments of the present disclosure, and the optional methods introduced in respective embodiments can be combined and cross referenced without conflict, thereby extending various possible embodiments, which shall be considered as the embodiment schemes disclosed by the present disclosure.

## Claims

1. A processing system of a thread block, wherein the thread block comprises a first sub-thread block and a second sub-thread block that are decomposed, the processing system comprises: a first computing unit (110a) for running the first sub-thread block and a second computing unit (110b) for running the second sub-thread block; and the first computing unit (110a) is used for obtaining data to be processed of the thread block, and the second computing unit (110b) is used for executing a processing task of the thread block according to the data to be processed obtained by the first computing unit (110a),
**characterized in that** the first computing unit (110a) comprises:
a first warp scheduler (111a), used for receiving an instruction scheduling request sent by the second computing unit (110b), wherein the instruction scheduling request is used for indicating inserting a remote loading instruction into an instruction queue of the first warp scheduler (111a); and
a first local share memory (115a), used for sending the data to be processed that are pre-stored in the first local share memory (115a) to the second computing unit (110b) according to instruction information of the remote loading instruction,
wherein the first computing unit (110a) is further used for loading the data to be processed that are obtained into the second computing unit (110b),
wherein the second computing unit (110b) comprises a second warp scheduler (111b) and a second local share memory (115b);
the second warp scheduler (111b) is used for sending an instruction scheduling request to the first computing unit (110a) and sending a remote writing request instruction to the second local share memory (115b); and
the second local share memory (115b) is used for waiting for data writing from the first computing unit (110a) according to instruction information of the remote writing request instruction.

2. The processing system of the thread block according to claim 1, **characterized in that**: the first computing unit (110a) and the second computing unit (110b) are independent running computing units, respectively, which are located on a same parallel processor.

3. The processing system of the thread block according to claim 2, **characterized in that**: the data to be processed are stored in a storage space located outside the parallel processor.

4. The processing system of the thread block according to claim 2 or 3, **characterized in that**: the parallel processor is a graphics processing unit.

5. A processing method of a thread block, applied to a parallel processor, wherein the processing method comprises:
decomposing the thread block into at least a first sub-thread block and a second sub-thread block, wherein the first sub-thread block is used for obtaining data to be processed of the thread block, and the second sub-thread block is used for executing a task of the thread block according to the data to be processed obtained by the first sub-thread block; and
assigning the first sub-thread block to a first computing unit (110a), and assigning the second sub-thread block to a second computing unit (110b),
**characterized in that** the processing method of the thread block further comprises:
obtaining the data to be processed of the thread block by the first computing unit (110a), and loading the data to be processed to the second computing unit (110b);
wherein loading the data to be processed to the second computing unit (110b) by the first computing unit (110a) comprises:
in response to an instruction scheduling request sent by the second computing unit (110b), inserting a remote loading instruction into an instruction queue of a warp scheduler of the first computing unit (110a); and
according to instruction information of the remote loading instruction, the warp scheduler of the first computing unit (110a) notifying a local share memory of the first computing unit (110a) to send the data to be processed to a local share memory of the second computing unit (110b).

6. The processing method of the thread block according to claim 5, **characterized in that**: the first computing unit (110a) and the second computing unit (110b) are independent running computing units, respectively, which are located on a same parallel processor, and the data to be processed are stored in a storage space located outside the parallel processor.

7. A processor, **characterized in that**: the processor comprises the processing system of the thread block according to any one of claims 1-4.

8. An electronic device, **characterized in that**: the electronic device comprises the processor according to claim 7.

## Patentansprüche

1. Verarbeitungssystem eines Thread-Blocks, wobei
der Thread-Block einen ersten Thread-Teilblock und einen zweiten Thread-Teilblock umfasst, die zerlegt sind, wobei das Verarbeitungssystem umfasst: eine erste Recheneinheit (110a) zum Ausführen des ersten Thread-Teilblocks und eine zweite Recheneinheit (110b) zum Ausführen des zweiten Thread-Teilblocks; und
die erste Recheneinheit (110a) verwendet wird, um die zu verarbeitenden Daten des Thread-Blocks zu erhalten, und die zweite Recheneinheit (110b) verwendet wird, um eine Verarbeitungsaufgabe des Thread-Blocks gemäß den von der ersten Recheneinheit (110a) erhaltenen zu verarbeitenden Daten auszuführen,
**dadurch gekennzeichnet, dass** die erste Recheneinheit (110a) umfasst: einen ersten Warp-Scheduler (111a), der verwendet wird, um eine von der zweiten Recheneinheit (110b) gesendete Anforderung zur Anweisungsplanung zu empfangen, wobei die Anforderung zur Anweisungsplanung verwendet wird, um das Einfügen einer Remote-Ladeanweisung in die Anweisungswarteschlange des ersten Warp-Schedulers (111a) anzuzeigen; und
einen ersten lokalen gemeinsamen Speicher (115a), der verwendet wird, um die zu verarbeitenden Daten, die im ersten lokalen gemeinsamen Speicher (115a) vorgespeichert sind, gemäß den Anweisungsinformationen des Remote-Ladens an die zweite Recheneinheit (110b) zu senden, wobei
die erste Recheneinheit (110a) ferner verwendet wird, um die zu verarbeitenden Daten, die in die zweite Recheneinheit (110b) eingegeben werden, zu laden, wobei
die zweite Recheneinheit (110b) einen zweiten Warp-Scheduler (111b) und einen zweiten lokalen gemeinsamen Speicher (115b) umfasst;
der zweite Warp-Scheduler (111b) verwendet wird, um eine Anforderung zur Anweisungsplanung an die erste Recheneinheit (110a) zu senden und eine Remote-Schreibanforderungsanweisung an den zweiten lokalen gemeinsamen Speicher (115b) zu senden; und
der zweite lokale gemeinsame Speicher (115b) wird verwendet, um auf das Schreiben von Daten von der ersten Recheneinheit (110a) gemäß den Anweisungsinformationen der Remote-Schreibanforderungsanweisung zu warten.

2. Verarbeitungssystem des Thread-Blocks nach Anspruch 1, **dadurch gekennzeichnet, dass**:
die erste Recheneinheit (110a) und die zweite Recheneinheit (110b) jeweils selbstständige Recheneinheiten sind, die sich auf demselben Parallelprozessor befinden.

3. Verarbeitungssystem des Thread-Blocks nach Anspruch 2, **dadurch gekennzeichnet, dass**:
die zu verarbeitenden Daten in einem Speicherbereich gespeichert werdern, der sich außerhalb des Parallelprozessors befindet.

4. Verarbeitungssystem des Thread-Blocks nach Anspruch 2 oder 3, **dadurch gekennzeichnet, dass**:
der Parallelprozessor eine Grafikprozessoreinheit ist.

5. Verarbeitungsverfahren für einen Thread-Block, das auf einen Parallelprozessor angewendet wird, wobei das Verarbeitungsverfahren Folgendes umfasst:
Zerlegen des Thread-Blocks in mindestens einen ersten Thread-Teilblock und einen zweiten Thread-Teilblock, wobei der erste Thread-Teilblock verwendet wird, um die zu verarbeitenden Daten des Thread-Blocks zu erhalten, und der zweite Thread-Teilblock verwendet wird, um eine Aufgabe des Thread-Blocks gemäß den vom ersten Thread-Teilblock erhaltenen zu verarbeitenden Daten auszuführen; und
Zuweisen des ersten Thread-Teilblocks an eine erste Recheneinheit (110a) und Zuweisen des zweiten Thread-Teilblocks an eine zweite Recheneinheit (110b), **dadurch gekennzeichnet, dass** das Verarbeitungsverfahren für den Thread-Block ferner Folgendes umfasst:
Erhalten der zu verarbeitenden Daten des Thread-Blocks durch die erste Recheneinheit (110a) und Laden der zu verarbeitenden Daten in die zweite Recheneinheit (110b); wobei das Laden der zu verarbeitenden Daten in die zweite Recheneinheit (110b) durch die erste Recheneinheit (110a) Folgendes umfasst:
als Antwort auf eine von der zweiten Recheneinheit (110b) gesendete Anforderung zur Anweisungsplanung das Einfügen einer Remote-Ladeanweisung in eine Anweisungswarteschlange eines Warp-Schedulers der ersten Recheneinheit (110a); und
gemäß Anweisungsinformationen der Remote-Ladeanweisung, Benachrichtigen eines lokalen gemeinsamen Speichers der ersten Recheneinheit (110a) durch den Warp-Scheduler der ersten Recheneinheit (110a), um die zu verarbeitenden Daten an einen lokalen gemeinsamen Speicher der zweiten Recheneinheit (110b) zu senden.

6. Verarbeitungsverfahren für den Thread-Block nach Anspruch 5, **dadurch gekennzeichnet, dass**:
die erste Recheneinheit (110a) und die zweite Recheneinheit (110b) jeweils selbstständige Recheneinheiten sind, die sich auf demselben Parallelprozessor befinden, und die zu verarbeitenden Daten in einem Speicherbereich gespeichert werden, der sich außerhalb des Parallelprozessors befindet.

7. Prozessor, **dadurch gekennzeichnet, dass**: der Prozessor das Verarbeitungssystem des Thread-Blocks nach einem der Ansprüche 1 bis 4 umfasst.

8. Elektronisches Gerät, **dadurch gekennzeichnet, dass**: das elektronische Gerät den Prozessor nach Anspruch 7 umfasst.

## Revendications

1. Système de traitement d'un bloc de fil d'exécution, dans lequel le bloc de fil d'exécution comprend un premier sous-bloc de fil d'exécution et un deuxième sous-bloc de fil d'exécution qui sont décomposés, le système de traitement comprend : une première unité de calcul (110a) pour exécuter le premier sous-bloc de fil d'exécution et une deuxième unité de calcul (110b) pour exécuter le deuxième sous-bloc de fil d'exécution; et
la première unité de calcul (110a) est utilisée pour obtenir des données à traiter du bloc de fil d'exécution, et la deuxième unité de calcul (110b) est utilisée pour exécuter une tâche de traitement du bloc de fil d'exécution en fonction des données à traiter obtenues par la première unité de calcul (110a),
**caractérisé en ce que** la première unité de calcul (110a) comprend :
un premier ordonnanceur de relocalisation (111a), utilisé pour recevoir une demande d'ordonnancement d'instructions envoyée par la deuxième unité de calcul (110b), dans lequel la demande d'ordonnancement d'instructions est utilisée pour indiquer l'insertion d'une instruction de chargement à distance dans une file d'attente d'instructions du premier ordonnanceur de relocalisation (111a) ; et
une première mémoire partagée locale (115a), utilisée pour envoyer les données à traiter qui sont pré-stockées dans la première mémoire partagée locale (115a) à la deuxième unité de calcul (110b) conformément aux informations d'instruction du chargement à distance, dans lequel la première unité de calcul (110a) est en outre utilisée pour charger les données à traiter qui sont obtenues dans la deuxième unité de calcul (110b), dans lequel la deuxième unité de calcul (110b) comprend un deuxième ordonnanceur de relocalisation (111b) et une deuxième mémoire partagée locale (115b) ;
le deuxième ordonnanceur de relocalisation (111b) est utilisé pour envoyer une demande d'ordonnancement d'instructions à la première unité de calcul (110a) et envoyer une instruction de demande d'écriture à distance à la deuxième mémoire locale partagée (115b) ; et
la deuxième mémoire partagée locale (115b) est utilisée pour attendre l'écriture de données provenant de la première unité de calcul (110a) conformément aux informations d'instruction de l'instruction de demande d'écriture à distance.

2. Système de traitement du bloc de fil d'exécution selon la revendication 1, **caractérisé en ce que** : la première unité de calcul (110a) et la deuxième unité de calcul (110b) sont des unités de calcul fonctionnant de manière indépendante, respectivement, qui sont situées sur un même processeur parallèle.

3. Système de traitement du bloc de fil d'exécution selon la revendication 2, **caractérisé en ce que** : les données à traiter sont stockées dans un espace de stockage situé à l'extérieur du processeur parallèle.

4. Système de traitement du bloc de fil d'exécution selon la revendication 2 ou 3, **caractérisé en ce que** : le processeur parallèle est une unité de traitement graphique.

5. Procédé de traitement d'un bloc de fil d'exécution appliqué à un processeur parallèle, dans lequel le procédé de traitement comprend :
décomposer le bloc de fil d'exécution en au moins un premier sous-bloc de fil d'exécution et un deuxième sous-bloc de fil d'exécution, dans lequel le premier sous-bloc de fil d'exécution est utilisé pour obtenir des données à traiter du bloc de fil d'exécution, et le deuxième sous-bloc de fil d'exécution est utilisé pour exécuter une tâche du bloc de fil d'exécution selon les données à traiter obtenues par le premier sous-bloc de fil d'exécution; et
l'affectation du premier sous-bloc de fil d'exécution à une première unité de calcul (110a), et l'affectation du deuxième sous-bloc de fil d'exécution à une deuxième unité de calcul (110b),
**caractérisé en ce que** le procédé de traitement du bloc de fil d'exécution comprend en outre :
l'obtention des données à traiter du bloc de fil d'exécution par la première unité de calcul (110a), et le chargement des données à traiter dans la deuxième unité de calcul (110b) ;
dans lequel le chargement des données à traiter dans la deuxième unité de calcul (110b) par la première unité de calcul (110a) comprend :
en réponse à une demande d'ordonnancement d'instructions envoyée par la deuxième unité de calcul (110b), l'insertion d'une instruction de chargement à distance dans une file d'attente d'instructions d'un planificateur de relocalisation de la première unité de calcul (110a) ; et
conformément aux informations d'instruction de l'instruction de chargement à distance, le planificateur de relocalisation de la première unité de calcul (110a) notifiant à une mémoire partagée locale de la première unité de calcul (110a) d'envoyer les données à traiter à une mémoire partagée locale de la deuxième unité de calcul (110b).

6. Procédé de traitement du bloc de fil d'exécution selon la revendication 5, **caractérisé en ce que** : la première unité de calcul (110a) et la deuxième unité de calcul (110b) sont des unités de calcul fonctionnant de manière indépendante, respectivement, qui sont situées sur un même processeur parallèle, et les données à traiter sont stockées dans un espace de stockage situé à l'extérieur du processeur parallèle.

7. Processeur, **caractérisé en ce que** : le processeur comprend le système de traitement du bloc de respectivement selon l'une quelconque des revendications 1 à 4.

8. Dispositif électronique, **caractérisé en ce que** : le dispositif électronique comprend le processeur selon la revendication 7.
